(19) Europäisches Patentamt / European Patent Office / Office européen des brevets

(11) **EP 1 995 273 B2**

(12) **NEW EUROPEAN PATENT SPECIFICATION**
After opposition procedure

(45) Date of publication and mention
of the opposition decision:
**23.08.2023 Bulletin 2023/34**

(45) Mention of the grant of the patent:
**09.01.2013 Bulletin 2013/02**

(21) Application number: **08156742.2**

(22) Date of filing: **22.05.2008**

(51) International Patent Classification (IPC):
**B29C 44/08** (2006.01)   **B29C 44/26** (2006.01)
**B29C 44/34** (2006.01)   **B29C 44/60** (2006.01)
**C08J 9/12** (2006.01)   **E04F 19/04** (2006.01)

(52) Cooperative Patent Classification (CPC):
**C08J 9/127; B29C 44/26; B29C 44/3446;**
**B29C 44/348; B29C 44/605; E04F 19/0436;**
C08J 2201/03; C08J 2203/02; C08J 2203/14;
C08J 2325/06; E04F 2019/0413; E04F 2019/0454

(54) **Process and apparatus for producing foamed styrenic polymers**

Verfahren und Vorrichtung zur Herstellung von Styrolpolymerschaum

Processus et appareil de production de polymères styréniques expansés

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **22.05.2007 GB 0709720**

(43) Date of publication of application:
**26.11.2008 Bulletin 2008/48**

(73) Proprietor: **Orac Holding NV
8400 Oostende (BE)**

(72) Inventor: **Taillieu, Guy
8460 Oudenburg (BE)**

(74) Representative: **IPLodge bv
Technologielaan 9
3001 Heverlee (BE)**

(56) References cited:
WO-A1-2004/074368   BE-A- 838 628
BE-A5- 1 019 920   GB-A- 994 073
US-A- 3 922 328   US-A- 4 424 287
US-A- 5 753 717   US-A1- 2006 211 782
US-B1- 6 910 307

- 'Thermoplastic Foams', J L Throne, 1996, Chapter 5
- 'Thermoplastic Foam Processing -Principles and Development', CRC Press, 2005
- 'Foam Extrusion -Principles and Practice', CRC Press, 2000

## Description

### Technical field of the invention

The present invention relates to a styrenic polymer foam and a method for producing the same.

### Background of the invention

High density foamed polystyrene profiles of 400 kg/m3 or higher are well known in the art of building decoration.

They can be produced with sharp edges and smooth surfaces. Some efforts have been made in the art to obtain polystyrene profiles with a lower density while keeping similar esthetical properties. For instance, the use of supercritical $CO_2$ gas has been proposed. The use of $CO_2$ gas for this purpose is far from optimal because it leads to a very fast expansion of the polystyrene, leading to defective cell structures and consequently to shrinkage during the cooling process. As a consequence, complicated and expensive shaping tools are required to obtain acceptable profile shapes in spite of the high degree of shrinkage. Moreover, the homogeneous incorporation of supercritical $CO_2$ in polystyrene is often problematic. Additionally, the fast expansion of the polystyrene under the action of the $CO_2$ gas leads to high radial contact forces of the melt onto the calibration surface. These high radial forces increase the friction between the melt and the calibration surface to such an extent that the axial force needed to pull the polystyrene through the calibration unit must be increased. This increases the likelihood of fractures at the melt surface, and can lead to the rupture of the extrudate. Lubricants, sometimes in large amounts, are therefore often used in the prior art to avoid such problems. This lubricant is usually introduced in the die between the melt flow and the wall of the die land.

US 2006/211782 discloses a method for producing extruded styrenic polymer foam sheets having a density from about 1 to about 15 lb/ft$^3$ (~16-240). The method comprises mixing in an extruder: a styrenic polymer composition, a chemical blowing agent, and a physical blowing agent such as methyl formate. The mixing leads to the formation of a single phase mixture. The method further comprises gradually cooling down said mixture to a temperature in the range from about 240°F to 320°F, performing a foaming of said mixture upon extruding said mixture through a shaping tool and passing said foam through a shaping system in order to form said styrenic polymer foam. Profiles having sharp edges are however not disclosed.

US5753717 discloses the production of foam sheets having a density between 1.5 lbs/ft$^3$ and 4 lbs/ft$^3$ (~24-64 Kg/m$^3$). The method involves mixing in an extruder; a styrenic polymer composition, a nucleating agent and $CO_2$ in a quantity of 5.5% to 10% by weight of resin. A profile having sharp edges is however not disclosed.

GB9L4073 discloses a method for producing an extruded styrenic polymer foam rod having a density of 2.5-5 lb/ft$^3$ (~40-80 Kg/m$^3$). The method comprises mixing in an extruder: a **styrenic** polymer composition, a chemical blowing agent in a quantity liberating from 0.2 to 6% of water and carbon dioxide and a physical blowing agent in a quantity of 2-15wt%. A profile having a density between 100 and 400 g/m$^3$ and sharp edges is however not disclosed.

US6910307 discloses an extruded decorative thermoplastic foam profile having a density of 1.6-3 lbs/ft$^3$ (~26-48 Kg/m3). It is extruded preferably from polyethylene with isobutene as a blowing agent.

None of the above mentioned prior art disclose profiles having sharp edges and having a density between 100 and 400 g/m$^3$. There is therefore a need in the art for new and Improved methods for producing foamed styrenic polymer profiles.

### Summary of the invention

It is an object of the present invention to provide good methods for producing styrenic polymer foams of good quality in a cost-efficient way.

The above objective is accomplished by a method according to the present invention.

It is an embodiment of the present invention to provide a method for producing a styrenic polymer foam taking advantage of the synergetic effect existing when a chemical blowing agent and a physical blowing agent are used in the same extrusion process. The chemical blowing agent, aside from its blowing effect, can play the role of a nucleating agent for the physical blowing agent. An advantage of the present invention is that the homogeneity of the cell sizes and their distribution in the polymer material is particularly good. The chemical blowing agent, releasing a gas, is responsible for the initial fast foaming of the styrenic polymer composition at the exit of the die. This fast foaming process enables filling in efficiently an optionally present calibrator in an initial stage of the blowing process. The physical blowing agent, preferably having a lower vapour pressure than the gas released by the chemical blowing agent, has its foaming activity extending over a larger range of temperature and permits therefore to extend the foaming activity to lower temperatures where a stronger structural strength exists in the foam. This temperature can for instance be down to 55°C, 50°C, 45°C, 40°C or 35°C. As a result, shrinkage of the foam can be remarkably reduced or suppressed. For instance, n-pentane can extend its foaming activity down to temperatures as low as 35°C.

In a first aspect, the present invention relates to a method for producing a styrenic polymer foam profile according to claim 1.

It is an advantage of the present invention to provide methods for extruding styrenic polymer foams which have reduced shrinkage during the cooling stage. It is also an advantage of the present invention to provide methods for producing styrenic polymer foams which reduce the need for complicated and expensive shaping tools. It is also an advantage of the present invention to provide methods for producing styrenic polymer foams wherein the contact forces between the expanding styrenic polymer and the shaping tools (die and/or calibrator) used to give it its form is reduced and the need for lubricants is therefore diminished.

In the present invention, the styrenic polymer foam is in the form of a profile, preferably a solid, hollow or open profile including sharp edges and/or elements of details having small radiuses. The styrenic polymer foams produced by the method of the present invention are particularly well adapted to form profiles because they combine the advantages of, on one hand, being obtainable with sharp edges and a smooth surface and, on another hand, being light and therefore inexpensive.

In the present invention, the method of the first aspect may further comprise the step of passing the foam trough a calibration system. This is advantageous because it permits to control better the shape of the foam produced.

It is an advantage of the present invention to provide alternative methods for extruding styrenic polymer foams having a density controllable by the addition of blowing agents, e.g. to obtain a density inferior to 400 kg/m$^3$. Accordingly, a feature of the present invention is a styrenic polymer foam produced having a density between 100 and 400 Kg/m$^3$, preferably between 160 and 240 Kg/m$^3$. This is advantageous because less material is used to obtain the same visual effect as obtained with higher densities styrenic polymer foams for a much lower production price on one hand and a lower ecological impact on another hand.

As another optional feature to any embodiment of the present invention, the styrenic polymer composition may have a calculated or measured melt flow index of between 2.5 and 18 g/10min, preferably of between 9 and 18 g/10min at 200°C under a load of 5 Kg according to ISO 1133. This range is advantageous because it permits a sufficient expansion of the styrenic polymer mixture in this way, the foaming gases are maintained dissolved therein at a pressure not causing excessive mechanical load on the extruder. The higher the melt temperature of the extrudate, the lower the pressures required to keep the blowing agents dissolved in the styrenic polymer composition and the easier it is to foam the styrenic polymer composition to a low density as the viscosity of the polymer to be formed is lower.

In the present invention, step (i) of claim 1 is advantageous because by first introducing the chemical blowing agent, it will also act as a nucleating agent for the physical blowing agent. Moreover, by introducing the physical blowing agent further down in the process, at a point when the mixture is in a plasticized state, the physical blowing agent is more easily dissolved.

As another optional feature to any embodiment of the present invention the styrenic polymer composition comprises or consists of one or more polystyrene polymers. This is advantageous because polystyrene is both cheap and effective when used in the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices and methods in this field, the present concepts are believed to represent substantial new and novel improvements, including departures from prior practices, resulting in the provision of more efficient, stable and reliable devices and methods of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

## Brief description of the drawings

Fig. 1 is a schematic representation of a cross-sectional view of an extruder suitable for performing a method according to an embodiment of the present invention.

Fig. 2 is an example of profile obtained via a method according to an embodiment of the present invention.

Fig. 3 is a schematic explanation of what means elements of detail or edges having a "radius".

## Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

The term "profile" as used herein and unless provided otherwise refers to an extruded plastic product, excluding film or sheets having a characteristic constant axial section. Profiles include sections such as but not limited to quadratic, circular, U-shaped, T-shaped, L-shaped or any other shaped section, such as e.g. complex sections of any possible shape.

The invention will now be described by a detailed description of several embodiments of the Invention. It is clear that other embodiments of the invention can be configured according to the knowledge of persons skilled in the art without departing from the true spirit or technical teaching of the invention, the invention being limited only by the terms of the appended claims. The teachings of the present invention permit the design of improved methods and apparatus for producing styrenic polymer foams, e.g. of densities lower than 400 kg/m$^3$ of enhanced quality in a cost efficient way.

In a first aspect, the present invention relates to a method for producing a styrenic polymer foam according to claim 1.

As indicated in claim 1, the styrenic polymer foam is therefore produced from a styrenic polymer composition.

Suitable styrenic polymer compositions include but are not limited to styrenic homopolymers and copolymers of styrenic compounds and copolymerizable ethylenically unsaturated comonomers. The styrenic polymer composition may further include minor proportions of non-styrenic polymers. The styrenic polymer composition may be comprised solely of one or more styrenic homopolymers, one or more styrenic copolymers, a blend of one or more of each of styrenic homopolymers and copolymers, or blends of any of the foregoing with a non-styrenic polymer. Regardless of composition, the styrenic polymer material comprises greater than 50 and preferably greater than 70 weight percent of styrenic monomeric units. Most preferably, the styrenic polymer material is comprised entirely of styrenic monomeric units. Suitable styrenic polymers include those derived from styrenic compounds such as styrene, alphamethylstyrene, vinyl benzene, vinyl toluene, chlorostyrene, and bromostyrene. Minor amounts of monoethylenically unsaturated compounds may be copolymerized with styrenic compounds. Examples of copolymerizable compounds include but are not limited to acrylic acid, methacrylic acid, ethacrylic acid, maleic acid, itaconic acid, acrylonitrile, maleic anhydride, methyl acrylate, ethyl acrylate, butyl acrylate, propyl acrylate, methyl methacrylate, vinyl acetate, vinyl alcohol, amides, 1,3-butadiene, 1,3-pentadiene, and 1,4-hexadiene. Preferred structures comprise substantially polystyrene (that is, greater than 80 percent by weight) and most preferably entirely of polystyrene because polystyrene foam is economical, and may form good profiles with smooth surface and sharp edges when used according to embodiments of the present invention. For instance, a general purpose polystyrene (GPPS) is suitable.

For instance, the styrenic polymer composition can consist in a blend of a first styrenic polymer having a relatively high melt flow index (MFI) and a second styrenic polymer having a relatively low MFI. The use of such a blend can be advantageous because the lower MFI polymer provides improved strength and/or hardness and the higher MFI polymer is easier to foam and/or permits to obtain profiles with sharper edges and/or sharper details. Playing on the ratio of polymers having different MFI permits therefore to optimize the process and the properties of the obtained foam.

The styrenic polymer composition has preferably a calculated or measured (according to ISO 1133, at 200 °C under a load of 5 Kg) melt flow index (MFI) of between 2.5 and 18 g/10min, preferably of between 9 and 18 g/10min. In order to calculate the melt flow index of a mixture having two or more components, the following evaluation method can be used if the MFI and the weight fraction of each component is known:

$$Log(MFI_{mixture}) = \sum_{i=1}^{n} W_i Log(MFI_i) \,,$$

wherein $MFI_{mixture}$ is the melt flow index of the mixture, $W_i$ is the weight fraction of component i and $MFI_i$ is the melt flow index of component i.

For example, in one specific embodiment of the present invention, the styrenic polymer used can be a mixture comprising 50%wt of a first polystyrene having an MFI of 7.5 (e.g. Empera™ 153F from the company NOVA Innovene International SA) and 50%wt of a second polystyrene (e.g. Empera™ 156F from the company NOVA Innovene International SA) having an MFI of 24 ; the resulting calculated MFI for the mixture would then be 13.4.

The Vicat temperature of the styrenic polymer composition is preferably 90 to 110°C, more preferably 95 to 105°C. This is advantageous because these ranges are good compromise between the ease of blowing and the possibility to obtain profiles with sharp edges. With those relatively high Vicat temperature, stiffness of the cell structure is reached at a relatively high temperature, i.e. fast enough upon cooling to obtain a profile keeping the its shape.

The foaming of the styrenic polymer composition is obtained by incorporating in the styrenic polymer composition blowing agents. The blowing agents used in this first aspect of the present invention are at least a chemical blowing agent and a physical blowing agent.

A chemical blowing agent is a chemical agent, e.g. particularly a solid but a liquid is not excluded from this invention, which undergoes heat-induced chemical change, e.g. decomposition, in the polymer composition causing formation of a gas. This decomposition is usually triggered by heat, but can alternatively be triggered by the presence of a co-reactant. For instance, a chemical blowing agent could be triggered by the presence of water, whereby water is included in the formulation but only becomes available for chemical reaction upon the addition of heat. E.g. such would be the case for certain hydrated salt compounds mixed with the chemical blowing agent sodium borohydride.

Suitable chemical blowing agents include but are not limited to bicarbonate - acid mixture (e.g. a sodium bicarbonate - citric acid mixture or a sodium bicarbonate - citric acid - citrate mixture), organic acid salts, azodicarbonamide, azobisformamide, azobisisobutyrolnitrile, diazoaminobenzene, 4,4'-oxybis(benzene sulfonyl hydrazide) (OBSH), N,N'-dinitrosopentamethyltetramine (DNPA), sodium borohydride, p-toluenesulfonyl hydrazide, p-toluenesulfonyl semicarbazide, diisopropylhydrazodicarboxylate, 5-phenyl-3,6-dihydro-1,3,4-oxadiazin-2-one, potassium hydrogencarbonate, polycarbonic acid, ammonium carbonate, ammonium carbamate, ammonium acetate, ammonium diethyldithiocarbamate, and other chemical blowing agents well known in the art. Mixtures of chemical blowing agents can be used as well.

One advantage of chemical blowing agents is that they are easy to handle and the carbon dioxide or nitrogen gas typically evolved is relatively inert, non-flammable, and non-toxic. Preferably, the chemical blowing agent used releases $CO_2$ as a gas upon decomposition. Examples of commercially available $CO_2$ releasing blow-

ing agents are TRACEL™ NC 7155 and TRACEL™ INC 7207F from the firm Tramaco among others. An advantage of $CO_2$ releasing blowing agents is that they are themselves usually non-toxic, which makes them easy and safe to work with. On the other hand, the $CO_2$ released gives rise to a slower expansion than $N_2$.

The chemical blowing agent is preferably used in a quantity of 0.1 to 1.5 % wt. For instance it can be used in a quantity of 0.5 to 1.5 %wt or 0.7 to 1.5 %wt. Preferably, it is used in a quantity of 0.3 to 1.2 %wt, more preferably 0.5 to 1 %wt, even more preferably 0.5 to 0.8 %wt and most preferably 0.6 to 0.8 %wt related to the weight of the styrenic polymer composition. The chemical blowing agent may be used pure or in the form of a compound combining the chemical blowing agent as such with additives. For instance, TRACEL™ NC 7155 is sold under the form of white granules comprising about 70% of the actual blowing agent. The use of such granules has the advantage to enable an easier mixing with the styrenic polymer composition, e.g. when the styrenic polymer composition is also in the form of granules. The use of 1% of TRACEL™ NC 7155 should therefore be interpreted as the use of 0.7% of chemical blowing agent.

The use of a chemical blowing agent is also advantageous because it can serve as a nucleating agent for a physical blowing agent. A physical blowing agent is a material that is normally a gas or a low boiling point liquid at room temperature and is introduced into the melt in this form. A proper physical blowing agent can change phase but usually does not decompose significantly at the temperatures reached in the extruder during the extrusion process.

Suitable physical blowing agents include but are not limited to lower alcohols such as but not limited to methanol, ethanol, n-propanol and isopropanol; hydrocarbons, especially alkanes having up to six carbon atoms such as methane, ethane, propane, n-butane, isobutane, n-pentane, isopentane, neopentane, hexane, cyclobutane and cyclopentane; ketones such as e.g. acetone, alkyl ethers such as but not limited to dimethyl ether, diethyl ether and methyl ethyl ether; water, carbon dioxide, nitrogen, air (nitrogen and oxygen blend), $SF_6$, nitrous oxide, and noble gases such argon, helium or xenon. Mixtures of two or more of these physical blowing agents can also be used.

Preferably, the physical blowing agent(s) used has (have) a low vapour pressure at 20°C of 2kPa to 1000 kPa, preferably 2 kPa to 250 kPa. For instance, gaseous $CO_2$ has a vapour pressure at 20°C of c.a. 5730 kPa. Although gaseous $CO_2$ is usable as the physical blowing agent within the present invention, it is less preferred. The vapour pressure at 20°C is c.a. 56.6 kPa for n-pentane, c.a. 78 kPa for isopentane and c.a. 36 kPa for cyclopentane.

Preferred physical blowing agent(s) are methanol, ethanol, n-propanol, isopropanol, n-butane, isobutane, n-pentane, isopentane, neopentane, cyclopentane, acetone, water and mixtures thereof. More preferably, the physical blowing agent is selected from the group consisting of n-butane, isobutane, n-pentane, isopentane, neopentane, cyclopentane, acetone and mixture thereof. More preferably, the physical blowing agent is selected from the group consisting of n-butane, isobutane, n-pentane, isopentane, neopentane, cyclopentane and mixture thereof. Even more preferably, the physical blowing agent is selected from the group consisting of n-pentane, isopentane, neopentane or a mixture thereof. Most preferably, the physical blowing agent is n-pentane. In presence of a chemical blowing agent, the use of a certain quantity of physical blowing agent such as e.g. pentane, allows control and adjustment of the speed of the foaming process and in particular control and adjustment of the expansion ratio.

The physical blowing agent is preferably used in a quantity of $5*10^{-2}$ to $1.6*10^{-1}$ mol/Kg of styrenic polymer composition, preferably of $7*10^{-2}$ to $1.4*10^{-1}$ mol/Kg of styrenic polymer composition, more preferably of $9*10^{-2}$ to $1.3*10^{-1}$ mol/Kg of styrenic polymer composition, most preferably of $1.0*10^{-1}$ to $1.2*10^{-1}$ mol/Kg of styrenic polymer composition

Various additives can be added such as but not limited to impact modifiers, nucleation agents (e.g. talc, calcium carbonate, silica,...), fire retardants, UV-stabilizers, pigments, antioxidants, fillers, reinforcement fibers, lubricants (e.g. fatty acid amids, polyethylene waxes, styrenic waxes, silicone compounds...), among others. Preferably, a nucleating agent is used. Most preferably, this nucleating agent is talc (e.g. from a 50% masterbatch).

The extruder can be a single extruder or a tandem extruder (i.e. two coupled sub-extruders). The extruder (or each sub-extruder) can comprise one or two screws. If the extruder or one (or both) of the sub-extruders comprise two screws, they can be either co-rotating or counter rotating. Preferably, the extruder has a single screw or is a tandem extruder composed of two sub-extruders, each having a single screw. One or more dosing units are preferably coupled to the extruder. The dosing units for the styrenic polymer composition, the chemical blowing agent and the optional additives are preferably coupled to the feeder of the extruder while the dosing unit for the physical blowing agent can be either coupled to the feeder or coupled to an injection port downstream to the feeder. The extruder is preferably divided in several zones controllable in temperature. Preferably, a first part of the extruder is adapted to heat up the fed mixture to a temperature high enough to plastify it and to obtain an homogeneous melt while a second part of the extruder is adapted to progressively cool the plastified mixture down to the extrusion temperature. The first part may have a length to diameter ratio (LD) of 12 to 20, preferably 14 to 18, most preferably 15 to 17. The second part may have a length to diameter ratio (LD) of 15 to 35, preferably 16 to 32, more preferably 18 to 30, even more preferably 20 to 28, even more preferably, 22 to 26, most preferably, 23 to 25. The extruder has preferably a length to diameter ratio of 40 or more. In some embodiments, the first part correspond to the first sub-extruder of a tandem extruder and the second part correspond to the second sub-extruder of the tandem extruder.

Prior to step (i), a dosing, such as for instance a gravimetric dosing, of the different components is preferably performed.

The chemical blowing agent Is preferably added to the neat styrenic polymer composition, mixed, and fed into an extruder together with the styrenic polymer composition via the feeder of the extruder. The mixing can for instance be performed in a mixing hopper. The mixture is then heated to a temperature above the Vicat temperature of the styrenic polymer composition to ensure intimate mixing and further heated to the activation temperature of the chemical blowing agent, resulting in decomposition of the chemical blowing agent. The gas formed on activation is substantially dissolved or dispersed in the melt mixture. The temperature and pressure of the system are controlled to maintain substantially a single phase.

The physical blowing agent is introduced in the extruder via an injection port situated downstream from the feeder. Preferably, the introduction of the physical blowing agent is performed at a position of the extruder where the chemical blowing agent (fed in earlier) has already decomposed. Preferably, the introduction of the physical blowing agent is operated at an LD of 12 to 20, preferably 14 to 18, more preferably 15 to 17 from the beginning of the extruder (i.e. from the beginning of the feed-end of the screw or the first screw of this extruder). Preferably, the introduction of the physical blowing agent is performed at the end of the first part or at the beginning of the second part or between the first part and the second part of the extruder. In the case of a tandem extruder, the physical blowing agent is preferably introduced between the first sub-extruder and the second sub-extruder. The physical blowing agent is preferably added under pressure. Preferably, a sufficient pressure is used to maintain the physical blowing agent in a liquid form at the temperature of the melt. In the embodiments where the physical blowing agent is introduced at a position of the extruder where the chemical blowing agent has already decomposed, the mixture (now incorporating the physical blowing agent and the pressurized gas released by the chemical blowing agent) is further plasticized and preferably kept under sufficient pressure to obtain an homogeneous single phase mixture.

The method of the present invention may comprise the steps of:

   a) introducing said styrenic polymer composition and said chemical blowing agent as a premix via the feeder of the extruder,
   b) mixing and heating said premix in order to obtain a plasticized mixture,
   c) introducing said physical blowing agent under pressure through an inlet performed in the extruder, dowstream from the feeder, and

   d) kneading and pressurizing the plasticized mixture and the second blowing agent until a single phase mixture is obtained.

The temperature of the resulting single phase mixture is then gradually cooled in the second part of the extruder to a temperature of preferably 135 to 160°C, while the pressure is maintained at preferably 40 to 180 bar, more preferably at 40 to 120 bar, i.e. high enough to avoid a pre-expansion of one of the used blowing agent. Gradually cooling the single phase mixture in the second part of the extruder down to a temperature as low as 120°C is possible for a low production speed (low foam output) but as soon as a high output is wished, the cooling is preferably down to a temperature of or above 135°C.

After cooling to a temperature above 135°C, the single phase mixture enters a shaping tool (e.g. a die) that imposes its shape to the polymeric mixture. Upon exiting the die, the polymeric mixture is foamed due to a pressure drop. In order to avoid foaming activity in the die, i.e. in order to keep the blowing agents dissolved in the melt, the pressure of the melt is preferably kept at a sufficient level until the melt reaches the outlet of the shaping tool. How rapidly the pressure is preferably decreased at the outlet of the die is better determined experimentally and adapted in function of the rheological properties of the melt as is well known by the person skilled in the art. One way to control the pressure at this level is to play on the size and design of the die endplate split and/or the length of the land. Another way to control the pressure at this level is to control the temperature of the die.

The expansion of the styrenic polymer foam operates slowly and is preferably controlled by passing the styrenic polymer foam through a calibration system, optionally controlled in temperature. In order to reduce friction between the calibration system and the foaming styrenic polymer, one or more of the following can be done: a) the geometry of the calibration unit can preferably be adapted to the changing shape of the die output during foaming, b) the foam surface is preferably kept at a temperature below the Tg of the styrenic polymer, c) the calibration unit is preferably coated on its inside with a low-friction coating. The calibration system preferably participate in the cooling of the foamed polymeric mixture. The styrenic polymer foam may also pass through a water bath for cooling purpose. The formed styrenic polymer foam is most conveniently pulled by e.g. a haul off or any other motorised pulling device known from the person skilled in the art. The haul off preferably comprises pads shaped in such a way as to minimize the contact forces of the pads with the surface of the styrenic polymer foam. The styrenic polymer foam has preferably already a stable geometry before it contacts the pulling device (e.g. the haul off pads). It is also possible to apply decorative motives on the styrenic polymer foam by using e.g. heated embossing rolls. The embossing rolls are preferably installed in the calibration line. The styrenic polymer foam can then be cut to size with e.g. a saw.

The styrenic polymer foam obtained has preferably a closed cell structure and a smooth surface. Its density ranges preferably between 100 and 400 $Kg/m^3$, most preferably between 150 and 250 $Kg/m^3$. Experiments have shown that operating in accordance with the present invention forms profiles with sharp edges and detailed motives. The styrenic polymer foam obtained may contain in some embodiments up to 2%wt of additives.

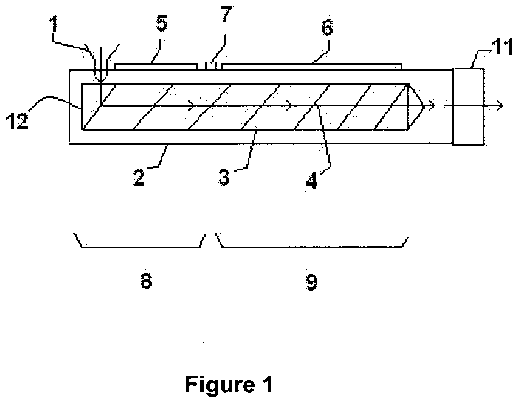

In Figure 1, a schematic cross-section of an extruder (2) suitable for performing a method according to a particular embodiment of the present invention is shown. On the left side of the scheme, a feeder, i.e. a material inlet (1) is represented. A single screw (3) is represented in the extruder (2) and the transport direction (4) is indicated by arrows. The feed-end (12) of the screw (3) is shown. The extruder (2) is divided in a first part (8) comprising heating means (5) and a second part (9) comprising cooling means (6). An injection port (7) is represented between the first (8) and second part (9). The extruder (2) ends with a die (11), i.e. a shaping tool.

In a specific embodiment of the present invention, a styrenic polymer composition, a $CO_2$ releasing chemical blowing agent and optionally other additives are added as a premix in the extruder (2) via the feeder (1). The premix is then heated and plasticised by the heating means (5) and the screw (3) to obtain a plasticised mixture at the end of the first part (8) of the extruder (2). Pentane is then added under pressure through the injection port (7). The plasticised mixture now comprising both the chemical blowing agent and the physical blowing agent is kneaded and pressurized until a single phase mixture is obtained. The single phase mixture, while progressing through the second part (9) of the extruder (2) is gradually cooled down by the cooling means (6) and is extruded through the die (11).

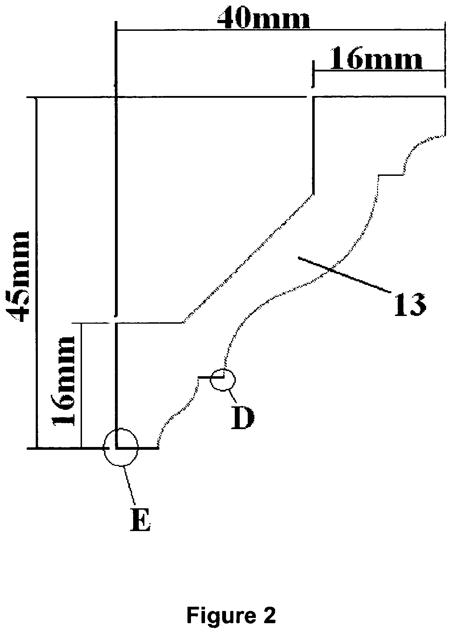

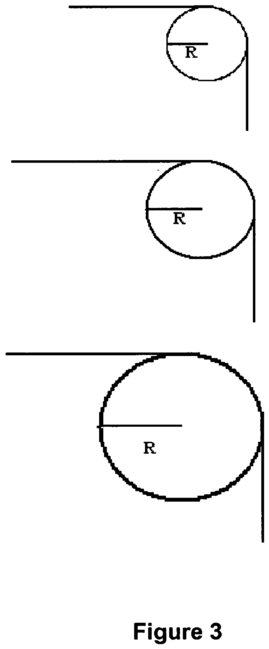

The styrenic polymer foam profiles according to the present invention have a surface Shore hardness D of 35 or more. For instance the surface Shore hardness D can be comprised between 35 and 55. Shore hardness D can be measured according to NEN-EN-ISO 868, DIN 53505, or ASTM D2240. These profiles comprise very sharp elements of detail D or edges E having a radius of 1 mm or less. The radius of an element of detail or of an edge is evaluated as follow in the case of right angles: A right angle is in theory perfectly sharp and has a radius of zero. In reality, right angles obtained via a manufacture process always appear rounded when observed under sufficient magnification. A right angle such as the right angle of an edge E or the right angle of an element of detail D (see Fig. 2) of a profile 13 can be characterized by the radius R of the circle which curvature equal the curvature of the rounded right angle (see Fig 3 for three examples of right angles. From top to bottom, the sharpness decreases and the radius increases). A smaller radius for an element of detail means a sharper detail. A small radius for an edge means a sharp edge. The initial tack may be 140 $Kg/cm^2$ or more. This initial tack is measured for the glue ORAC DECOFIX Pro™ as follow: Use is made of a rheometer having a plate-plate configuration wherein each of the samples plates have a diameter of 2 cm and wherein the sample plates are spaced apart by 1000 $\mu$m. The glue is then introduced between the plates. The excess glue is then removed without moving the sample plates and the assembly sample plate-glue-sample plate is allowed to rest for 1 minute. A continuous flow measurement is then performed wherein the force is increased from 10 Pa to 2500 Pa in 3 minutes by steps of 20 Pa. The force at which the first displacement within the sample plate-glue-sample plate occurs is the "initial tack" of the sample for the glue concerned (here ORAC DECOFIX Pro™). The paint adhesion of a primer coat (PRIMER AQUASTAR™ 09645/2342 WIT) is also very good as it may correspond to a cross-cut test grade of 1 to 2 when measured according DIN 53151. After application of the paint and drying, the sample is scratched in two directions with the cross cutter during 24 hours. A cross-cut test grade of 1 means that detachment of small flakes of the coating at the intersection of the cuts is observed but that the affected cross-cut area is not significantly greater than 5%. A cross-cut test grade of 2 means that the coating has flaked along the edges and /or at the intersections of the cuts. A cross-cut area significantly greater than 5%, but not significantly greater than 15%, is affected. The good paint adhesion is an indication of high surface tension present on the surface of the sample.

Example 1:

In a first step, a mixture comprising:

- 50%wt of a first general purpose polystyrene (EMPERA™ 156F) having a MFI of 24 and a Vicat softening temperature of 101 °C,
- 50%wt of a second general purpose polystyrene (EMPERA™ 153F) having a MFI of 7.5 and a Vicat softening temperature of 101 °C,
- Talc as a nucleating agent, and
- 0.7%wt of a $CO_2$ releasing chemical agent (1 %wt of TRACEL™ NC 7155 as a 70% masterbatch),

was fed in a single extruder having a LD of 40.

In a second step, the mixture was mixed and heated above 135°C in the extruder in order to obtain a plasticized mixture and to decompose the chemical blowing agent. In a third step, 0.8%wt of n-pentane was injected under 250 bars through an entry port situated at LD 16, i.e. between the heating section of the extruder and the cooling section of the extruder. In a fourth step, the mixture is gradually cooled down while keeping the pressure in the extruder high enough to avoid expansion of the blowing agents. The cooled melt then passed through a die and expanded directly after exiting this die. The melt then passed in calibrators where it was further cooled. The polystyrene foam profile obtained had a density of 200 Kg/m3, sharp edges and a smooth surface.

It is to be understood that although preferred embodiments, specific constructions and configurations, as well as materials, have been discussed herein for devices according to the present invention, various changes or modifications in form and detail may be made without departing from the scope and spirit of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A method for producing a styrenic polymer foam profile having a surface Shore hardness D of 35 or more, very sharp elements of detail (D) or edges (E) having a radius of 1 mm or less, and a density between 100 and 400 Kg/m$^3$, the method comprising the steps of:

   (i) mixing in an extruder (2):

   o a styrenic polymer composition,
   o a chemical blowing agent for releasing a gas, said chemical blowing agent being in a quantity of 0.1 to 1.5 %wt related to the weight of the styrenic polymer composition, and
   o a physical blowing agent at a quantity of $9 \cdot 10^{-2}$ to $1.3 \cdot 10^{-1}$ mol/Kg of the styrenic polymer composition, under sufficient pressure and heat to obtain a single phase mixture, *wherein*

   *(ia) said styrenic polymer composition and said chemical blowing agent are introduced as a premix via a material inlet (1) of the extruder (2), (ib) mixing and heating said premix are performed, in order to obtain a plasticized mixture, (ic) said physical blowing agent is introduced under pressure through an injection port (7) performed in the extruder (2), downstream from the material inlet (1), and (id) said plasticized mixture and said second blowing agent are kneaded and pressurized until said single phase mixture is obtained,*

   (ii) gradually cooling down said mixture,
   (iii) performing an initial foaming of said mixture upon extruding said mixture through a shaping tool (11), and

   (iv) passing said foam through a calibration system in order to form said styrenic polymer foam profile,

   wherein said chemical blowing agent is responsible for said initial foaming.

2. The method according to claim 1, wherein said physical blowing agent has a lower vapour pressure than a gas released by the chemical blowing agent and has its foaming activity extending over a larger range of temperature than said chemical blowing agent thereby permitting an extension of the foaming activity to lower temperatures where a stronger structural strength exists in said foam.

3. The method according to claim 1 or claim 2, wherein said temperature is in step (ii), said mixture is gradually cooled down to a temperature above 135°C.

4. The method according to any one of claims 1 to 3, wherein said styrenic polymer composition has a calculated or measured melt flow index of between 2.5 and 18 g/10min at 200°C under a load of 5 Kg according to ISO 1133.

5. The method according to any one of claims 1 to 4, wherein said styrenic polymer composition comprises two or more styrenic polymers of different melt flow indices.

6. The method according to any one of claims 1 to 5, wherein said physical blowing agent has a vapour pressure at 20°C of 2 Kpa to 1000 Kpa.

7. The method according to any one of claims 1 to 6, wherein said physical blowing agent is selected from the group consisting of n-butane, isobutane, n-pentane, isopentane, neopentane, cyclopentane, acetone and mixture thereof.

8. The method according to claim 7, wherein said physical blowing agent is n-pentane.

9. The method according to claim 1, wherein step (c) is performed at a length to diameter ratio (LD) of 12 to 20 as measured from the beginning of the feed-end (12) of the first or only screw (3) of the extruder (2).

10. The method according to any one of the preceding claims wherein said styrenic polymer composition consists in one or more polystyrene polymers.

11. A foamed profile comprising a styrenic polymer foam, obtainable by a method according to any one of claims 1 to 10, the profile being a solid, hollow or open profile.

**Patentansprüche**

1. Verfahren zur Herstellung eines Styrolpolymerschaumprofils mit einer Shore-Oberflächenhärte D von 35 oder mehr, sehr scharfen Detailelementen (D) oder Kanten (E) mit einem Radius von 1 mm oder weniger und einer Dichte zwischen 100 und 400 kg/m$^3$, wobei das Verfahren die folgenden Schritte umfasst:

   (i) Mischen in einem Extruder (2):

   o einer Styrolpolymer-Zusammensetzung,
   o eines chemischen Treibmittels zur Freisetzung eines Gases, wobei das chemische Treibmittel in einer Menge von 0,1 bis 1,5 Gew.-% bezogen auf das Gewicht der Styrolpolymer-Zusammensetzung vorliegt, und
   o eines physikalischen Treibmittels in einer Menge von $9 \cdot 10^{-2}$ bis $1,3 \cdot 10^{-1}$ mol/kg der Styrolpolymer-Zusammensetzung unter ausreichendem Druck und ausreichender Wärme, um ein einphasiges Gemisch zu erhalten, *wobei*

   *(ia) die Styrolpolymer-Zusammensetzung und das chemische Treibmittel als Vormischung über einen Materialeinlass (1) des Extruders (2) eingeführt werden,*
   *(ib) ein Mischen und Erhitzen der Vormischung durchgeführt werden, um ein plastifiziertes Gemisch zu erhalten,*
   *(ic) das physikalische Treibmittel unter Druck durch eine Einspritzöffnung (7) eingeführt werden, die in dem Extruder (2) stromabwärts von dem Materialeinlass (1) gebildet ist, und*
   *(id) das plastifizierte Gemisch und das zweite Treibmittel geknetet und unter Druck gesetzt wird, bis das einphasige Gemisch erhalten wird,*

   (ii) allmähliches Abkühlen des Gemisches,
   (iii) Durchführen eines anfänglichen Aufschäumens des Gemisches beim Extrudieren des Gemisches durch ein Formungswerkzeug (11), und
   (iv) Durchleiten des Schaumes durch ein Kalibriersystem, um das Styrolpolymerschaumprofil zu bilden,

   wobei das chemische Treibmittel für das anfängliche Aufschäumen verantwortlich ist.

2. Verfahren nach Anspruch 1, wobei das physikalische Treibmittel einen niedrigeren Dampfdruck aufweist als ein durch das chemische Treibmittel freigesetztes Gas und seine Schäumungsaktivität sich über einen größeren Temperaturbereich erstreckt als jene des chemischen Treibmittels, wodurch eine Ausdehnung der Schäumungsaktivität auf niedrigere Temperaturen ermöglicht wird, bei denen eine stärkere strukturelle Festigkeit in dem Schaum vorliegt.

3. Verfahren nach Anspruch 1 oder 2, wobei bezüglich der Temperatur in Schritt (ii) das Gemisch allmählich auf eine Temperatur über 135 °C abgekühlt wird.

4. Verfahren nach einem der Ansprüche 1 bis 3, wobei die Styrolpolymer-Zusammensetzung einen berechneten oder gemessenen Schmelzflussindex zwischen 2,5 und 18 g/10 min bei 200 °C unter einer Last von 5 kg gemäß ISO 1133 aufweist.

5. Verfahren nach einem der Ansprüche 1 bis 4, wobei die Styrolpolymer-Zusammensetzung zwei oder mehr Styrolpolymere mit unterschiedlichen Schmelzflussindizes umfasst.

6. Verfahren nach einem der Ansprüche 1 bis 5, wobei das physikalische Treibmittel einen Dampfdruck bei 20 °C von 2 kPa bis 1000 kPa aufweist.

7. Verfahren nach einem der Ansprüche 1 bis 6, wobei das physikalische Treibmittel ausgewählt ist aus der Gruppe bestehend aus n-Butan, Isobutan, n-Pentan, Isopentan, Neopentan, Cyclopentan, Aceton und Mischungen davon.

8. Verfahren nach Anspruch 7, wobei das physikalische Treibmittel n-Pentan ist.

9. Verfahren nach Anspruch 1, wobei der Schritt (c) bei einem Verhältnis von Länge zu Durchmesser (LD) von 12 bis 20, gemessen vom Beginn des Einzugsendes (12) der ersten oder einzigen Schnecke (3) des Extruders (2), durchgeführt wird.

10. Verfahren nach einem der vorhergehenden Ansprüche, wobei die Styrolpolymer-Zusammensetzung aus einem oder mehreren Polystyrolpolymeren besteht.

11. Geschäumtes Profil, umfassend einen Styrolpolymerschaum, erhältlich durch ein Verfahren nach einem der Ansprüche 1 bis 10, wobei das Profil ein Vollprofil, Hohlprofil oder offenes Profil ist.

**Revendications**

1. Procédé de production d'un profilé en mousse polymère styrénique présentant une dureté Shore D de surface supérieure ou égale à 35, des éléments de détail (D) très nets ou des arêtes (E) ayant un rayon de 1 mm ou moins, et une densité entre 100 et 400 kg/m$^3$, le procédé comprenant les étapes suivantes :

(i) mélange dans une extrudeuse (2) :

• d'une composition polymère styrénique,
• d'un agent gonflant chimique pour libérer un gaz, ledit agent gonflant chimique étant en une quantité de 0,1 à 1,5 % en poids par rapport au poids de la composition polymère styrénique, et
• d'un agent gonflant physique en une quantité de 9·10$^{-2}$ à 1,3·10$^{-1}$ mol/kg de la composition polymère styrénique, sous une pression et une chaleur suffisantes pour obtenir un mélange monophasé, *dans lequel*

*(ia) ladite composition polymère styrénique et ledit agent gonflant chimique sont introduits en tant que prémélange par l'intermédiaire d'une entrée de matériau (1) de l'extrudeuse (2),*
*(ib) le mélange et le chauffage dudit prémélange sont effectués afin d'obtenir un mélange plastifié,*
*(ic) ledit agent gonflant physique est introduit sous pression à travers un orifice d'injection (7) réalisé dans l'extrudeuse (2), en aval de l'entrée de matériau (1), et*
*(id) ledit mélange plastifié et ledit second agent gonflant sont malaxés et mis sous pression jusqu'à obtention dudit mélange monophasé,*

(ii) refroidissement progressif dudit mélange,
(iii) réalisation d'une formation initiale de mousse dudit mélange lors de l'extrusion dudit mélange à travers un outil de formage (11), et
(iv) passage de ladite mousse à travers un système de calibrage afin de former ledit profilé en mousse polymère styrénique,
dans lequel ledit agent gonflant chimique est responsable de ladite formation initiale de mousse.

2. Procédé selon la revendication 1, dans lequel ledit agent gonflant physique a une pression de vapeur inférieure à un gaz libéré par l'agent gonflant chimique et a son activité de formation de mousse s'étendant sur une plage de températures plus grande que ledit agent gonflant chimique, permettant de ce fait une extension de l'activité de formation de mousse à des températures plus basses où une résistance structurelle plus élevée existe dans ladite mousse.

3. Procédé selon la revendication 1 ou la revendication 2, dans lequel ladite température est dans l'étape (ii), ledit mélange est refroidi progressivement jusqu'à une température supérieure à 135 °C.

4. Procédé selon l'une quelconque des revendications 1 à 3, dans lequel ladite composition polymère styrénique a un indice de fluidité à chaud calculé ou mesuré compris entre 2,5 et 18 g/10 min à 200 °C sous une charge de 5 kg selon ISO 1133.

5. Procédé selon l'une quelconque des revendications 1 à 4, dans lequel ladite composition polymère styrénique comprend deux polymères styréniques ou plus de différents indices de fluidité à chaud.

6. Procédé selon l'une quelconque des revendications 1 à 5, dans lequel ledit agent gonflant physique a une pression de vapeur à 20 °C de 2 kPa à 1 000 kPa.

7. Procédé selon l'une quelconque des revendications 1 à 6, dans lequel ledit agent gonflant physique est sélectionné dans le groupe constitué par du n-butane, de l'isobutane, du n-pentane, de l'isopentane, du néopentane, du cyclopentane, de l'acétone et des mélanges de ceux-ci.

8. Procédé selon la revendication 7, dans lequel ledit agent gonflant physique est du n-pentane.

9. Procédé selon la revendication 1, dans lequel l'étape (c) est réalisée avec un rapport longueur-diamètre (LD) de 12 à 20 tel que mesuré à partir du début de l'extrémité d'alimentation (12) de la première ou seule vis (3) de l'extrudeuse (2).

10. Procédé selon l'une quelconque des revendications précédentes, dans lequel ladite composition polymère styrénique est constituée d'un ou de plusieurs polymères de polystyrène.

11. Profilé en mousse comprenant une mousse polymère styrénique, pouvant être obtenu par un procédé selon l'une quelconque des revendications 1 à 10, le profilé étant un profilé solide, creux ou ouvert.

**Figure 1**

**40mm**

**16mm**

**45mm**

**16mm**

13

D

E

**Figure 2**

**Figure 3**

**EP 1 995 273 B2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006211782 A
- US 5753717 A

- US 6910307 B